# EUROPEAN PATENT SPECIFICATION

(11) **EP 0 580 430 B1**
(45) Date of publication and mention of the grant of the patent: **28.01.1998**
(21) Application number: 93305765.5
(22) Date of filing: 22.07.1993
(51) Int. Cl.: A21C 3/06, A21C 11/16

(54) **Apparatus for charging filling material**
Vorrichtung zum Abfüllen von Füllmaterial
Appareil de chargement des matériaux de remplissage

(30) Priority: 22.07.1992 JP 216536/92
(43) Date of publication of application: 26.01.1994
(73) Proprietor: RHEON AUTOMATIC MACHINERY CO. LTD., Utsunomiya-shi Tochigi-ken (JP)
(72) Inventor: Hashimoto, Shigeru, Rheon Automatic Machinery, Utsunomiya-shi, Tochigi-ken (JP); Tashiro, Yasunori, Rheon Automatic Machinery, Utsunomiya-shi, Tochigi-ken (JP); Hasegawa, Kiyoshi, Rheon Automatic Machinery, Utsunomiya-shi, Tochigi-ken (JP)
(74) Representative: Leale, Robin George

(56) References cited:
- EP-A- 0 382 105
- DE-A- 2 758 643
- GB-A- 1 118 660
- US-A- 2 915 024
- US-A- 3 583 336
- US-A- 4 292 917

## Description

This invention relates to apparatus for charging doses of a filling material onto pieces of dough being transferred on a conveyor.

Conventional techniques do not provide any automated means for charging doses of a filling material onto pieces of dough, such as croissant dough, and rolling up the pieces of dough. In the prior art, a continuous sheet of dough is cut into substantially triangular pieces of a certain size. After receiving a filling material, these pieces are required to be transferred to a rolling-up device with the bottom edges of the triangles facing such device, i.e. with such bottom edges extending transversely of a transfer conveyor. To achieve this, the triangular pieces of dough must be rotated through 90°, for which purpose an orientation-changing device provided with nails or suction cups is generally used. Such devices are disclosed in Japanese Patent (B) 61-10088 and U.S. Patent 4,375,348.

By means of the devices of the patents just mentioned, the orientation of the pieces of dough can be successfully changed. However, there is a problem in that the pieces of dough tend to shift transversely on the conveyor, because the timing of catching and releasing them from the nails or suction cups by which they are engaged is not uniform, due to variations in the thickness of the pieces of dough and other factors. Consequently, the dough pieces shift in the direction of their widths and thus they are not regularly spaced transversely. As a result, a filling-charging device located downstream of the orientation-changing device will fail to place the doses of filling material on the central regions of the pieces of dough.

If the filling is not placed on the central regions of the dough pieces the filling may then be squeezed out from between adjacent layers of the dough pieces when they are rolled up. The filling then adheres to the belt of the rolling-up device and may cause the device to fail to operate. Because of these problems, at present these procedures are carried out manually.

US-A-4292917 discloses apparatus for charging a filling material onto pieces of dough being conveyed on a conveyor, including filling-charging means having discharging nozzles.

According to the present invention there is provided apparatus for charging a filling material onto pieces of dough being conveyed on a conveyor, comprising:
detecting means arranged to detect transverse shifts of the pieces of dough on the transfer conveyor and to generate signals representative of the amounts of such shifts;
filling-charging means disposed downstream of the said detecting means, the filling-charging means having discharging nozzles mounted movably in the transverse direction; and
a control unit for receiving from the detecting means the signals representative of the amounts of the said shifts and operative to control the discharging nozzles to move transversely by corresponding amounts so as to be aligned with the pieces of dough.

An embodiment of the invention will now be described by way of example and with reference to the accompanying drawings, in which:-
Fig. 1 is a plan view of an apparatus according to the invention, mounted on a transfer conveyor;
Fig. 2 is a partially sectional side view of the apparatus of Fig. 1; and
Fig. 3 is an explanatory drawing to illustrate how the detector means of the embodiment detects transverse shifts of pieces of dough.

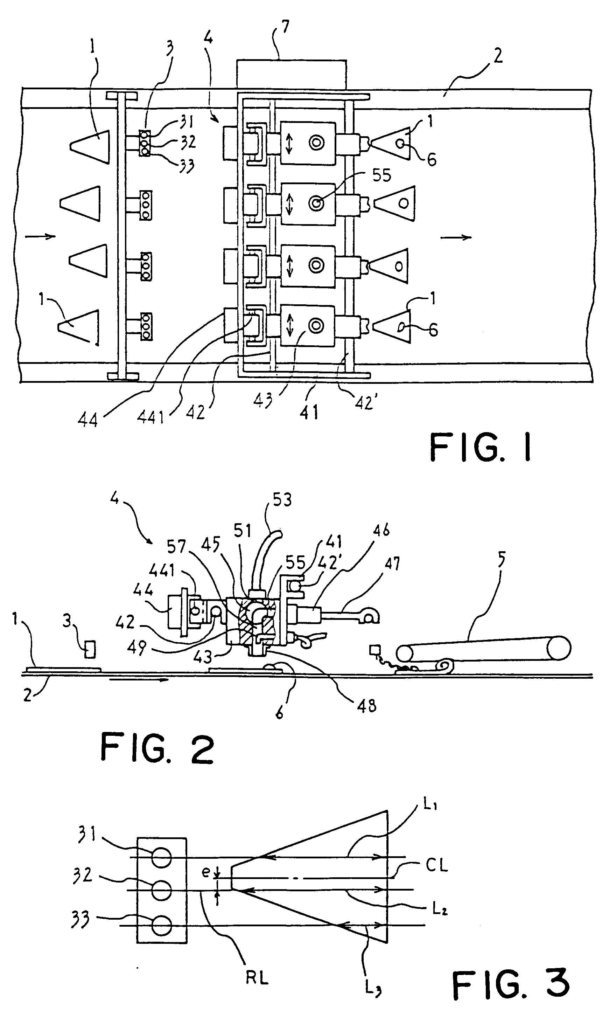

Referring first to Fig. 1, pieces of dough 1, each substantially in the shape of a triangle to be rolled up to form croissant dough pieces, are transferred on a conveyor 2.

A plurality of position detectors 3, which constitute a detecting means, are mounted on the conveyor 2. As shown in Figs. 1 and 3, each of the detectors 3 includes three reflection-type photoelectric switches 31, 32, 33 arranged in line transversely of the transfer direction of the conveyor 2. The detectors 3 detect the condition of each piece of dough which passes under the photoelectric switches 31, 32, 33. That is, the detectors 3, specifically the switches 31, 32, 33, detect an amount e of the shift of a center line CL of the piece of dough from a reference line RL which is under the switch 32. The details of the detection of the shift will be later described.

As shown in Figs. 1 and 2, a filling-charging means 4 is disposed downstream of the detectors 3. The filling-charging mechanism 4 includes a frame 41 supported above the conveyor 2, horizontal shafts 42, 42' secured to the frame 41, a plurality of transversely movable nozzle bodies 43 mounted on the shafts 42, 42', and servomotors 44 mounted on the frame 41. An output shaft of each servomotor 44 is rotatably connected to the corresponding nozzle body 43 so that the nozzle body 43 is moved laterally by operation of the servomotor.

As shown in Fig. 2, the nozzle body 43 has a rotary valve 45 connected to a filling-supply port 51 which is, in turn, connected to a flexible hose 53 and a filling-supply device not shown). A cylinder 46 is connected to the rotary valve 45 so as to be capable of receiving a predetermined amount of the filling material into the cylinder itself through a filling-suction port 55. A discharging nozzle 48 is also connected to the rotary valve 45 through a filling-discharging port 57. An air nozzle 49 is disposed in the filling-discharging port 57. The air nozzle 49 is concentric with the discharging port 57, but the diameter of the nozzle 49 is smaller than that of the discharging port. Thus the inner wall of the discharging port 57 and the outer wall of the air nozzle 49 define an annular passage for filling material. The air nozzle 49 is connected via piping to an air supply source.

The rotary valve 45 is supplied with filling material from the flexible house 53 of the filling-supply device, through an intake connected to the filling-supply port 51. A piston rod 47 of the cylinder 46 is withdrawn to draw a predetermined dose of the filling material through the valve 45 into the cylinder 46. Then, after the valve 45 has been rotated so that the filling-suction port 55 communicates with the filling-discharging port 57 (as shown in Fig. 2), the piston rod 47 is advanced to extrude the filling material into the discharging nozzle 48. As the filling material has a high viscosity and the stroke of the piston is adjusted so that the dose of filling material will not be discharged from the discharging nozzle 48, the filling material remains in the discharging nozzle 48 when the piston rod 47 is so advanced. The dose of filling material 6 is then discharged instantaneously from the nozzle 48 onto the appropriate piece of dough 1 with the aid of an air jet from the air nozzle 49. This handling of the filling material is controlled by a control unit 7 (Fig. 1), whose operation will be explained later.

Detecting the shifts of the pieces of dough will now be explained in more detail with reference to Fig. 3. Lengths L1, L2, and L3 of certain portions of the illustrated piece of dough are the lengths of the corresponding parts of the imaginary lines passing through the centers of the switches 31, 32, 33 in the direction of movement of the conveyor, and at the same time passing through the piece of dough being transferred on the transfer conveyor. The central photoelectric switch 32 of the detector 3 is located on the reference line RL. The other two photoelectric switches 31, 33 are positioned equidistantly from the switch 32. When the center line CL of a piece of dough shifts from the reference line RL, the lengths L1, L2, L3 of the portions of the piece of dough on the imaginary lines through the switches become different due to the triangular shapes and the bases of the dough pieces being transversely aligned. These lengths L1, L2, L3 are detected by measuring the times taken for the portions in question to pass under the switches 31, 32, 33. The amount of the shift e, including the direction of the shift to the right or left, of the piece of dough, is calculated from the measurements L1, L2, and L3.

When the detectors 3 have detected the times taken for each portion of the pieces of dough to pass them, they send signals representative of these times to the control unit 7 (Fig. 1), which may be a computer, disposed adjacent to one side of the transfer conveyor 2. Upon receiving such signals from the detectors 3, the control unit 7 calculates the amount by which each of the pieces of dough is shifted and actuates the servomotors 44 to cause the nozzle bodies 43 (that is, the discharging nozzles 48) to move transversely until the discharging nozzles 48 come to the calculated positions where the center lines CL or central portions of the pieces of dough are located. Data for timing the discharge of the filling material from the nozzles 48, related to the speed of the conveyor, the distance between the detectors 3 and the filling-charging mechanism, and the maximum period during which the nozzles can move transversely of the calculated positions, have been previously stored in the control unit 7.

When the pieces of dough come under the nozzles 48, which have already been moved to the calculated positions, the doses of filling material in the discharging nozzles 48 are instantaneously discharged onto the pieces of dough as mentioned above.

The pieces of dough with the doses of filling material are now conveyed downstream to a rolling-up device 5. This device may be of a conventional type consisting of a chain covering and/or an overhead belt conveyor, and is arranged to roll up the pieces of dough into croissant configurations, as shown in Fig. 2.

As described above, the amount of shift of each piece of dough from the reference line is known from the signals produced by the detectors 3, and each discharging nozzle 48 of the filling-charging mechanism 4 is moved a distance in a direction corresponding to the amount and direction of shift. Consequently, the filling material is placed on the central region of each piece of dough.

In the embodiment shown in Figures 1 and 2, servomotors are used to precisely move the nozzles 48. However, air cylinders may alternatively be used to move the nozzles when such precise movement is not required. In this case, the amount of the movement of the nozzles 48 may be preset within 10-20mm in both directions, i.e. to the right and left, from the reference line. The detecting device then detects only whether the shift of each piece of dough is rightward or leftward, and the nozzles are then moved the preset amount in the appropriate direction as so detected.

As explained above, the air nozzle 49 is concentrically disposed in the filling-discharging port 57 and an air jet from the air nozzle 49 blows the filling material through the discharging nozzle 48 disposed under the port 57. Thus, all of the filling material in the discharging nozzle 48 can be instantaneously discharged onto a piece of dough, even if the material has a viscosity as high as that of jam. Further, such instantaneous discharge does not impede the continuous transfer of the pieces of dough on the moving conveyor, and produces more pieces of dough with a filling.

Also, as the discharging nozzles 48 of the nozzle bodies 42 are positioned independently of each another, the nozzles can move to the central regions of the pieces of dough at the same time, even if the dough pieces are randomly shifted.

## Claims

1. Apparatus for charging a filling material (6) onto pieces of dough (1) being conveyed on a conveyor (2), comprising:
detecting means (3) arranged to detect transverse shifts (e) of the pieces of dough on the transfer conveyor and to generate signals representative of the amounts of such shifts;
filling-charging means (4) disposed downstream of the said detecting means, the filling-charging means having discharging nozzles (48) mounted movably in the transverse direction;
and a control unit (7) for receiving from the detecting means the signals representative of the amounts of the said shifts and operative to control the discharging nozzles to move transversely by corresponding amounts so as to be aligned with the pieces of dough.

2. Apparatus as claimed in claim 1, wherein the said detecting means (3) includes position detectors each comprising three photoelectric switches (31-33) for detecting the shift of each piece of dough (1) from a reference line (RL).

3. Apparatus as claimed in claim 1 or 2, which is particularly arranged to operate on pieces of dough in the shape of substantially triangular sheets which are transferred downstream with a bottom edge of the triangular sheet extending transversely and forming a leading end in the downstream direction.

4. Apparatus as claimed in claim 3, further comprising a rolling-up device (5) disposed downstream of the filling-charging means (4) for rolling up the triangular flat pieces of dough with the filling material applied thereto.

5. Apparatus as claimed in any preceding claim, wherein the said filling-charging means (4) comprises a plurality of nozzle bodies (43) including the said discharging nozzles (48), each nozzle body comprising:
a cylinder (46) arranged to receive a dose of filling material therein from a filling-supply source and to discharge the filling material therefrom;
a filling-discharging port (57) connectable at one end to the said cylinder to receive the filling material discharged from the cylinder and at the other end to the said discharging nozzle (48); and
an air nozzle (49) disposed in the filling-discharging port and above the discharging nozzle in such a manner that the outer surface of the air nozzle and the inner surface of the filling-discharging port define an annular passage for the filling material, the air nozzle being connected to an air supply source.

6. Apparatus as claimed in claim 5, wherein the said cylinder (46) is arranged to discharge the filling material to the discharging nozzle (48) through the said annular passage.

7. Apparatus as claimed in claim 5 or 6, wherein the said cylinder (46) receive the filling material from the filling-supply source through a rotary valve (45).

## Patentansprüche

1. Vorrichtung zum Abgeben eines Füllmaterials (6) auf Teigstücke (1), die auf einem Förderer (2) gefördert werden, umfassend:
eine Feststelleinrichtung (3) zum Feststellen von Querverschiebungen (e) der Teigstücke auf dem Überführungsförderer, und zum Erzeugen von Signalen, welche die Ausmaße solcher Verschiebungen darstellen;
eine Füllmaterialabgabeeinrichtung (4), die stromabwärts der genannten Feststelleinrichtung angeordnet ist und die Abgabedüsen (48) hat, die in Querrichtung bewegbar angebracht sind; und
eine Steuereinheit (7) zum Empfangen der Signale von der Feststelleinrichtung, welche die Ausmaße der genannten Verschiebungen darstellen, wobei sie wirksam ist, die Abgabedüsen zu steuern zwecks Querbewegung in entsprechenden Ausmaßen derart, daß sie mit den Teigstücken ausgerichtet sind.

2. Vorrichtung nach Anspruch 1, in welcher die Feststelleinrichtung (3) Positionsfühler umfaßt, deren jeder drei lichtelektrische Schalter (31-33) aufweist zum Feststellen der Verschiebung jedes Teigstücks (1) von einer Bezugslinie (RL).

3. Vorrichtung nach Anspruch 1 oder 2, die insbesondere vorgesehen ist, um an Teigstücken in der Gestalt von im wesentlichen dreieckförmigen Blättern zu arbeiten, die in Stromabwärtsrichtung überführt werden, während eine Unterkante des dreieckförmigen Blattes sich in Querrichtung erstreckt und ein Vorderende in der Stromabwärtsrichtung bildet.

4. Vorrichtung nach Anspruch 3, weiter umfassend eine Aufrolleinrichtung (5), die stromabwärts der Füllmaterialabgabeeinrichtung (4) angeordnet ist zum Aufrollen der dreieckigen ebenen Teigstücke mit dem auf sie aufgebrachten Füllmaterial.

5. Vorrichtung nach irgendeinem vorhergehenden Anspruch, in welcher die Füllmaterialabgabeeinrichtung (4) eine Mehrzahl von Düsenkörpern (43) aufweist einschließlich der Abgabedüsen (48), wobei jeder Düsenkörper umfaßt:
einen Zylinder (46) zum Aufnehmen einer Menge an Füllmaterial von einer Füllmaterialzuführquelle und zum Abgeben des Füllmaterials aus ihm;
eine Füllmaterialabgabeöffnung (57), die an einem Ende mit dem Zylinder, um von dem Zylinder abgegebenes Füllmaterial aufzunehmen, und am anderen Ende mit der Abgabedüse (48) verbindbar ist; und
eine Luftdüse (49), die in der Füllmaterialabgabeöffnung und über der Abgabedüse derart angeordnet ist, daß die Außenfläche der Luftdüse und die Innenfläche der Füllmaterialabgabeöffnung einen ringförmigen Durchgang für das Füllmaterial bilden, wobei die Luftdüse mit einer Luftzuführquelle verbunden ist.

6. Vorrichtung nach Anspruch 5, in welcher der Zylinder (46) vorgesehen ist, um das Füllmaterial zu der Abgabedüse (48) durch den ringförmigen Durchgang hindurch abzugeben.

7. Vorrichtung nach Anspruch 5 oder 6, in welcher der Zylinder (46) das Füllmaterial von der Füllmaterialzuführquelle über ein Drehventil (45) erhält.

## Revendications

1. Machine de dépôt d'une substance de garniture (6) sur des morceaux de pâte (1) en cours de transport sur un transporteur (2), comprenant :
un moyen de détection (3) réalisé de manière à détecter des décalages transversaux (e) des morceaux de pâte se trouvant sur le transporteur de transfert et à générer des signaux représentatifs des distances de ces décalages ;
un moyen (4) de dépôt de garniture qui est disposé en aval dudit moyen de détection, le moyen de dépôt de garniture comportant des embouts de décharge (48) montés mobiles en direction transversale ; et
un module de commande (7) destiné à recevoir du moyen de détection des signaux représentatifs des distances desdits décalages et capable de commander les embouts de décharge de manière à les déplacer transversalement sur des distances correspondantes de façon qu'ils soient alignés sur les morceaux de pâte.

2. Machine selon la revendication 1, dans laquelle ledit moyen de détection (3) comprend des détecteurs de position dont chacun comporte trois commutateurs photoélectriques (31-33) destinés à détecter le décalage de chaque morceau de pâte (1) par rapport à une ligne de référence (RL).

3. Machine selon la revendication 1 ou 2, qui est réalisée plus particulièrement pour fonctionner sur des morceaux de pâte ayant la forme de feuilles sensiblement triangulaires qui sont transférées vers l'aval de manière que le bord inférieur de la feuille triangulaire soit disposé transversalement et forme une extrémité de tête dans le sens allant vers l'aval.

4. Machine selon la revendication 3, comprenant par ailleurs un dispositif d'enroulement (5) disposé en aval du moyen (4) de dépôt de garniture pour enrouler les morceaux plats triangulaires de pâte sur lesquels la substance de garniture a été déposée.

5. Machine selon l'une quelconque des revendications précédentes, dans laquelle ledit moyen (4) de dépôt de garniture comprend plusieurs corps d'embout (43) comportant lesdits embouts de décharge (48), chaque corps d'embout comprenant :
un cylindre (46) disposé pour recevoir intérieurement une dose de substance de garniture provenant d'une source d'alimentation en garniture et pour en décharger la substance de garniture ;
un conduit (57) de décharge de garniture pouvant être raccordé à une extrémité audit cylindre pour recevoir la substance de garniture déchargée du cylindre et, à l'autre extrémité, audit embout de décharge (48) ; et
une buse à air (49) disposée dans le conduit de décharge de garniture et au-dessus de l'embout de décharge de manière que la surface extérieure de la buse à air et la surface intérieure du conduit de décharge de garniture délimitent un passage annulaire pour la substance de garniture, la buse à air étant raccordée à une source d'alimentation en air.

6. Machine selon la revendication 5, dans laquelle ledit cylindre (46) est disposé de manière à décharger la substance de garniture dans l'embout de décharge (48) par ledit passage annulaire.

7. Machine selon la revendication 5 ou 6, dans laquelle ledit cylindre (46) reçoit la substance de garniture de la source d'alimentation en garniture par l'intermédiaire d'un distributeur rotatif (45).
